# EUROPÄISCHE PATENTANMELDUNG

(11) **EP 3 818 818 A1**
(43) Veröffentlichungstag der Anmeldung: **12.05.2021**
(21) Anmeldenummer: 19000505.8
(22) Anmeldetag: 06.11.2019
(51) Int. Cl.: A01G 9/14, B66C 19/00, B66C 23/48

(54) **HEBEVORRICHTUNG ZUR ANHEBUNG VON VERSORGUNGSLEITUNGEN IN EINEM GEWÄCHSHAUS**

(71) Anmelder: Schoenmaker, Maarten, 26871 Papenburg (DE)
(72) Erfinder: Schoenmaker, Maarten, 26871 Papenburg (DE)

(57) **Zusammenfassung**

Die Erfindung betrifft eine Hebevorrichtung (5) für ein Gewächshaus (1) zur Anhebung von mindestens einer Versorgungsleitung (3), wobei die Hebevorrichtung (5) ein Trägerelement (6) aufweist, an welchem zumindest ein elektrischer Energiespeicher (7) angeordnet ist, eine mit dem elektrischen Energiespeicher (7) elektrisch verbundene Hydraulikeinheit mit zumindest einer Hydraulikpumpe (8), einen Hydraulikzylinder (9), und einen in dem Hydraulikzylinder (9) vorgesehenen Kolben (10) angeordnet ist, eine Zugkraftvorrichtung angeordnet ist, welche zumindest ein Umlenkelement (11) und zumindest ein Zugelement (12) umfasst, wobei die Zugkraftvorrichtung mit der Hydraulikeinheit kraftschlüssig und/oder formschlüssig verbunden ist, wobei das Zugelement (12) mit einem zum Anheben der Versorgungsleitung (3) ausgebildeten Verbindungselement (13) verbunden ist.

## Beschreibung

Die Erfindung betrifft eine Hebevorrichtung für ein Gewächshaus zur Anhebung von Versorgungsleitungen gemäß dem Oberbegriff des Patentanspruchs 1.

Aus dem Stand der Technik sind Gewächshäuser für Pflanzen und/oder Gewächse bekannt, in welchen beispielsweise Gemüse gezüchtet wird. Innerhalb der Gewächshäuser sind aus Metall ausgebildete Versorgungsleitungen, insbesondere meterlange schienenartig verlegte Heizungsrohre vorgesehen, welche zur Beheizung des Gewächshauses vorgesehen sind. Mehrmals im Jahr müssen diese Heizungsrohre angehoben werden, um Verschmutzungen, wie zum Beispiel Blätter und Äste, welche sich unterhalb der Heizungsrohre angesammelt haben, zu entfernen. Ebenso müssen bei einem Einsatz von Folien, welches sich ebenfalls unter den Heizungsrohren befinden, diese entfernt und ausgetauscht werden, um den darunter befindlichen Bodenbereich zu säubern. Bislang werden die mehrere Kilogramm wiegenden Heizungsrohre von drei bis fünf Arbeitern im Trupp abschnittsweise nacheinander angehoben. Beim mehrmaligen und wiederholenden Anheben der Heizungsrohre führt dies bei den Arbeitern zu gesundheitlichen Problemen, insbesondere zu Rückenproblemen. Zusätzlich führt die von drei bis fünf Arbeitern durchgeführte Reinigung des Gewächshauses zu erhöhten Personalkosten und im Ergebnis zu erhöhten Reinigungskosten für das Gewächshaus.

Daher ist es die Aufgabe der Erfindung, eine für einen Arbeiter einfach und komfortabel zu bedienende Hebevorrichtung bereitzustellen, durch welche die Reinigungskosten für das Gewächshaus reduziert werden.

Die Aufgabe wird gelöst durch den Patentanspruch 1, insbesondere durch den kennzeichnenden Teil des Patentanspruchs 1.

Dabei ist eine Hebevorrichtung für ein Gewächshaus zur Anhebung von mindestens einer Versorgungsleitung vorgesehen, wobei die Hebevorrichtung ein Trägerelement aufweist, an welchem zumindest ein elektrischer Energiespeicher angeordnet ist. Ferner ist an dem Trägerelement zumindest eine mit dem elektrischen Energiespeicher elektrisch verbundene Hydraulikeinheit angeordnet, welche zumindest eine Hydraulikpumpe, einen Hydraulikzylinder und einen in dem Hydraulikzylinder vorgesehenen Kolben, insbesondere Kolbenstange umfasst. Des Weiteren ist an dem Trägerelement zumindest eine Zugkraftvorrichtung angeordnet, welche zumindest ein Umlenkelement und zumindest ein Zugelement umfasst. Die Zugkraftvorrichtung ist mit der Hydraulikeinheit kraftschlüssig und/oder formschlüssig verbunden ist, wobei das Zugelement mit einem zum Anheben der Versorgungsleitung ausgebildeten Verbindungselement verbunden ist.
Die vorzugsweise handbedienbare Hebevorrichtung kann als Gewächshausversorgungsleitungshebevorrichtung ausgebildet sein, welche ausschließlich für den Gebrauch in einem Gewächshaus ausgebildet ist, in welchem Pflanzen und/oder Gewächse gezüchtet werden. Bei den Pflanzen kann es sich beispielsweise um Gemüsepflanzen, Blumen oder Obstpflanzen handeln. Die Pflanzen und/oder Gewächse können innerhalb des Gewächshauses zeilenartig und bezogen auf eine Längsachse des Gewächshauses spiegelsymmetrisch in Gängen zueinander angeordnet sein.
Das Gewächshaus kann mit beispielsweise als Heizungsrohre ausgebildeten Versorgungsleitungen versehen werden, welche zumindest teilweise innerhalb des Gewächshauses vorzugsweise schienenartig auf Folien angeordnet sind. Die Versorgungsleitungen können vorzugsweise paarweise entlang zu den Gängen angeordnet sein und können sich mehrere hundert Meter bis Kilometern entlang dieser Gänge erstrecken, wo die Pflanzen und/oder Gewächse eingepflanzt sind. Die Länge einer einzelnen Versorgungsleitung beträgt vorzugsweise 80m bis 120m. Insgesamt können aber auch Versorgungsleitungen beispielsweise eine Länge von bis zu 25km oder mehr aufweisen. Ferner sind diese Versorgungsleitungen aus einem oder mehreren Strängen zusammengesetzt, wobei ein Strang eine Länge von 100m bis 200m aufweisen kann. Das Gewicht an der zu hebenden Stelle der Versorgungsleitung kann 80kg bis 100kg aufweisen, welcher nur von mehreren Personen (drei bis fünf Personen) angehoben werden könnte. Des Weiteren können die Versorgungsleitungen auf als Klemmstützen ausgebildeten Abstützsockeln angeordnet sein, so dass diese von einer Bodenoberfläche des Gewächshauses beabstandet angeordnet sind, beispielsweise in einem Abstand von 10cm bis 20 cm von der Bodenoberfläche. Diese Klemmstützen können eine halbkreisförmige Ausnehmung aufweisen, welche zur formschlüssigen und/oder kraftschlüssigen Aufnahme der Versorgungsleitungen ausgebildet sind. Eine Oberfläche der halbkreisförmigen Ausnehmung der Klemmstütze ist komplementär zur geometrischen Oberfläche der Versorgungsleitung ausgebildet. Beim Anheben der Versorgungsleitungen können diese an den Versorgungsleitungen verbleiben oder alternativ auf der Bodenoberfläche verbleiben, wobei diese dann nachträglich eingesammelt werden müssen, um beispielsweise die Folie auszutauschen, welche unterhalb der Versorgungsleitungen angeordnet sein kann. Grundsätzlich können die Versorgungsleitungen zum Beheizen und/oder zum Bewässern der Pflanzen und/oder Gewächse ausgebildet sein. Dafür wird in die Versorgungsleitung ein Fluid, insbesondere Wasser gepumpt, welches vorzugsweise zum Beheizen eine Temperatur von 20 Grad Celsius bis 100 Grad Celsius aufweist.
Das Trägerelement kann als Fahrgestell ausgebildet sein und ist vorzugsweise aus Metall, insbesondere aus Eisen ausgebildet. Das Trägerelement kann aus Stabilitätsgründen eine Gitterstruktur aufweisen. Bevorzugt weist das Trägerelement eine Stahlrohrkonstruktion auf, welche einen kranartigen Aufbau aufweist. Ferner kann das Trägerelement zur Anordnung einer vorzugsweise von zwei Platten, insbesondere einer Holzplatte ausgebildet sein. Die Platten können zum Anordnen von technischen Bauteilen dienen, wie beispielsweise eine Betätigungsvorrichtung, Teile der Hydraulikeinheit, der elektrischen Energiespeicher, aber auch als Ablage für Werkzeuge, welche möglicherweise beim Reinigen des Gewächshauses benötigt werden. Des Weiteren kann vorgesehen sein, dass die Hebevorrichtung, insbesondere das Trägerelement mit vorzugsweise einem oder zwei Handgriffen versehen wird, welche zum Steuern der Hebevorrichtung dienen können.
Der elektrische Energiespeicher kann beispielsweise als Batterie ausgebildet sein. Es ist vorteilhaft, wenn die Batterie aufgeladen werden kann, sodass ein häufiges Wechseln der Batterie verhindert werden kann. Vorzugsweise sind zwei Batterien für die Hebevorrichtung vorgesehen, welche beispielsweise im Heckbereich der Hebevorrichtung angeordnet sind und zugleich als Gegengewicht zu der angehobenen Versorgungsleitung dient. Der elektrische Energiespeicher dient zum Betreiben der Hydraulikeinheit. Ebenfalls ist es denkbar, dass die Hebevorrichtung mit einem Elektromotorantrieb versehen wird, welcher durch den elektrischen Energiespeicher betrieben werden kann. Mithilfe des Elektromotorantriebs könnte man die Hebevorrichtung automatisiert bewegen. Dazu wären ein Betätigungshebel und ein Steuerelement notwendig, um die Hebevorrichtung zu beschleunigen oder abzubremsen.
Die Hydraulikeinheit kann einen Kompressor, insbesondere einen Hydraulikkompressor, die Hydraulikpumpe, den Hydraulikzylinder und den Kolben, insbesondere die Kolbenstange, welche in dem Hydraulikzylinder geführt ist, sowie Fluidleitungen umfassen. Ferner kann die Hydraulikeinheit Regel- und/oder Steuerventile, insbesondere Magnetventile zur Steuerung des Durchflusses des Fluids sowie Bolzen umfassen.
Der Hydraulikzylinder weist vorzugsweise eine zylinderförmige Struktur auf. Als Hydraulikflüssigkeit kann beispielsweise Öl verwendet werden. Der auf den Kolben, insbesondere die Kolbenstange wirkende Druck kann durch ein Drosselventil, welches der Hydraulikeinheit zugeordnet ist, verändert werden. Durch die Verwendung der Hydraulikeinheit kann eine zuverlässige, sichere, schnelle und zeitsparende Anhebung der Versorgungsleitungen realisiert werden. Ferner kann die Hebevorrichtung eine elektrische Steuereinheit, insbesondere eine elektrische Schaltung vorzugsweise zur Steuerung der Hydraulikeinheit umfassen.
Die Zugkraftvorrichtung kann beispielsweise als Seilzug, Kettenzug, Flaschenzug oder dergleichen ausgebildet sein. Vorzugsweise sind die Umlenkelemente der Zugkraftvorrichtung als Seilrollen oder Kettenrollen ausgebildet. Je nach Ausbildung der Hebevorrichtung können eine oder mehrere Umlenkelemente verwendet werden. Des Weiteren umfasst die Zugkraftvorrichtung Zugelement, welches beispielsweise als Seil, insbesondere Stahlseil oder Kette ausgebildet sein kann.
Das Verbindungselement kann beispielsweise als Haken ausgebildet sein, welcher mittels einer formschlüssigen und/oder kraftschlüssig Verbindung mit dem Zugelement verbunden ist. Dabei kann das Verbindungselement mit dem Zugelement verrastet, verklebt, eingesteckt oder verknotet sein. Theoretisch können auch mehrere Verbindungselemente an dem Zugelement angeordnet sein.
Durch die erfindungsgemäße Hebevorrichtung besteht nun der Vorteil, dass bestenfalls nur eine einzige Person notwendig ist, um die Versorgungsleitungen anzuheben. Mithilfe der Hebevorrichtung kann ein schnelles und sukzessives Anheben der Versorgungsleitung von Punkt zu Punkt erfolgen. Dabei kann die Versorgungsleitung entlang dem angehobenen Abschnitt die Form einer Gaußförmigen Glockenkurve annehmen. In vorteilhafterweise wird durch den Einsatz von weniger Personal die Säuberung des Gewächshauses wirtschaftlicher und gleichzeitig auch komfortabler für das Reinigungspersonal, weil auf schwere körperliche Arbeit durch den Einsatz der Hebevorrichtung verzichtet werden kann. Somit wird die Gesundheit des Reinigungspersonal dauerhaft sichergestellt. Des Weiteren kann die Reinigung des Gewächshauses auch schneller erfolgen, weil insbesondere durch die Hydraulikeinheit ein schnelles und sicheres Anheben der Versorgungsleitungen gewährleistet werden kann.
Nach einer bevorzugten Ausführung der Hebevorrichtung kann vorgesehen sein, dass das Verbindungselement mindestens einen ersten Kontaktabschnitt aufweist, welcher zumindest teilweise komplementär zu einer geometrischen Form einer Außenoberfläche der Versorgungsleitung ausgebildet ist. Durch diese Maßnahme kann sichergestellt werden, dass beim Anheben und/oder Senken die Versorgungsleitungen stabil und sicher in dem Verbindungelement gelagert sind. Ein Verrutschen der Versorgungsleitung in dem Verbindungselement kann somit im Wesentlichen ausgeschlossen werden.
Die Reinigungskosten für das Gewächshaus können weiter reduziert werden, wenn das Verbindungselement als Haken ausgebildet ist, welcher den ersten Kontaktabschnitt und vorzugsweise einen zu dem ersten Kontaktabschnitt zu einer Längsachse L des Verbindungselements spiegelsymmetrisch angeordneten zweiten Kontaktabschnitt umfasst. Wenn ein zweiter Kontaktabschnitt vorgesehen ist, können gleichzeitig zwei zueinander parallel verlaufende Versorgungsleitung in einem Zuge angehoben und/oder gesenkt werden. Dadurch wird die Reinigung des Gewächshauses beschleunigt. Denkbar ist es auch, dass der Haken mehrere, insbesondere mehr als zwei Kontaktabschnitte aufweist.
Ferner kann der Haken auch als Doppelhaken ausgebildet sein. Dazu kann der erste Kontaktabschnitt und vorzugsweise der zweite Kontaktabschnitt zumindest teilweise u-förmig ausgebildet sein und zur zeitweisen und punktuellen Aufnahme einer rohrförmigen, insbesondere rundförmigen ausgebildeten Versorgungsleitung vorgesehen sein. Mithilfe der vorzugsweise zwei Kontaktabschnitte können somit zwei beabstandet zueinander parallel verlaufende Versorgungsleitungen zeitgleich angehoben bzw. wieder gesenkt werden, um die Folien und/oder Verschmutzungen unterhalb der Versorgungsleitungen zu entfernen. Nach einer weiteren bevorzugten Ausführung der Hebevorrichtung kann vorgesehen sein, dass an dem Trägerelement mindestens ein erstes Abstützelement und vorzugsweise ein zweites Abstützelement angeordnet ist. Vorzugsweise kann jedes Abstützelement jeweils über mindestens ein Abstützfederelement mit dem Trägerelement verbunden sein. Das Abstützelement dient zur stabilen Lagerung der Hebevorrichtung, wenn die Versorgungsleitung mittels des Verbindungselement angehoben werden. Dabei wird das Abstützelement von seiner Ursprungsstellung, in welcher das Abstützfederelement in seinem entspannten Zustand ist, in eine Betriebsstellung überführt, in welcher das Abstützfederelement in seinem gespannten bzw. zusammengerücktem Zustand ist. Durch das mindestens ein Abstützelement wird in vorteilhafterweise ausgeschlossen, dass die Hebevorrichtung seitlich oder nach vorne wegkippt bzw. umkippt. Das Abstützfederelement sorgt in vorteilhafterweise dafür, dass nach dem Lösen des Verbindungselements von der Versorgungsleitung das Abstützelement selbstständig wieder von der Betriebsstellung in seine Ursprungsstellung gelangt. Das Abstützelement kann beispielsweise als Teller ausgebildet sein. Denkbar ist es auch, dass Abstützelement quaderförmig oder kugelartig auszubilden. Vorzugsweise ist das Abstützelement aus Metall ausgebildet. Die Abstützfederelemente können so robust ausgebildet sein, dass diese die Gewichtskraft der Hebevorrichtung tragen können und beim Anheben der Versorgungsleitung zusammengedrückt werden, wenn die zusätzliche Gewichtskraft der Versorgungsleitung auf die Hebevorrichtung wirkt.
Nach einer weiteren bevorzugten Ausführungsform der Hebevorrichtung kann vorgesehen sein, dass an dem Trägerelement mindestens drei Räder angeordnet sind, vorzugsweise vier Räder angeordnet sind, wobei beim Anheben der Versorgungsleitungen mittels des Verbindungselements alle Räder und Abstützelemente mit einer Bodenoberfläche des Gewächshauses in Kontakt stehen. Mithilfe der Räder kann die Hebevorrichtung einfach, schnell und sicher entlang den Versorgungsleitungen bewegt werden. Ferner können die Räder jeweils auch als Abstützelement dienen. Darüber hinaus ist es denkbar, dass die Räder mit einer Blockiervorrichtung versehen werden, sodass die Hebevorrichtung beim Anheben der Versorgungsleitung in einem unbewegten Zustand verbleibt. Bevorzugt kann vorgesehen sein, dass der Abstand von zwei an dem Trägerelement angeordnete Rädern, welche spiegelsymmetrisch in Fahrtrichtung zueinander angeordnet sind, größer ist als der Durchmesser, insbesondere der Außendurchmesser einer Versorgungsleitung, vorzugsweise von zwei nebeneinander angeordneten Versorgungsleitungen. Je nach Anordnung der Versorgungsleitungen in dem Gewächshaus kann somit die Hebevorrichtung neben der Versorgungsleitung bewegt werden, oder die Hebevorrichtung kann über der Versorgungsleitung bewegt werden. Durch diese Maßnahme gelingt es die Flexibilität der Hebevorrichtung zu steigern. Die Räder können auch als Rollen ausgebildet sein.
Nach einer weiteren bevorzugten Ausführungsform der Hebevorrichtung kann vorgesehen sein, dass der Kolben mit der Zugkraftvorrichtung, insbesondere mit mindestens einem Umlenkelement verbunden ist. Aufgrund dieser einfachen und kostengünstigen Konstruktion der Hebevorrichtung, kann mithilfe der Hydraulikeinheit, insbesondere mithilfe des Kolbens das Zugelement, insbesondere ein Seil bewegt werden, welches mit dem vorzugsweise als Doppelhaken ausgebildeten Verbindungselement verbunden ist. Die Hydraulikeinheit weist den Vorteil auf, dass schwere Lasten in wenigen Sekunden mittels der Hebevorrichtung angehoben werden können. Ebenfalls wäre es denkbar, dass die Zugkraftvorrichtung, insbesondere das Verbindungselement zusätzlich mit einem elektrischen Antrieb verbunden ist, um das Verbindungselement zur besseren Justierung an der Versorgungsleitung langsamer anfahren zu können.
Die Konstruktion der Hebevorrichtung kann sehr stabil ausgebildet werden, wenn das Trägerelement einen Frontabschnitt aufweist, der im Wesentlichen V-förmig oder U-förmig ausgebildet ist, wobei ein erster Schenkel und ein zweiter Schenkel des V-förmigen oder U-förmigen Frontbereichsabschnitts durch eine Basis miteinander verbunden sind. Insbesondere bei sehr schweren Versorgungsleitungen wird durch diese Konstruktion die Lebensdauer der Hebevorrichtung verlängert. Durch die V-förmige Struktur des Trägerelements, kann die Hebevorrichtung sehr nahe an die Versorgungsleitung herangefahren werden. Dabei sollte die Hebevorrichtung, insbesondere ein Schenkel der V-förmigen Struktur des Frontabschnitts im Wesentlichen parallel zu mindestens einer Versorgungsleitung angeordnet sein. Durch diese Maßnahme kann es gelingen, den Abstand zwischen der Hebevorrichtung und der Versorgungsleitung so gering wie möglich zu halten, um komfortabel, einfach und sicher das Verbindungselement mit der Versorgungsleitung zu verbinden.
Nach einer bevorzugten Ausführung der Hebevorrichtung kann vorgesehen sein, dass das Trägerelement einen Verbindungsabschnitt aufweist, welcher vorzugsweise den ersten Schenkel und den zweiten Schenkel verbindet, wobei auf dem Verbindungsabschnitt, insbesondere ein verschwenkbarer oder verdrehbarer erster Mast angeordnet ist, welcher zumindest teilweise zur Anordnung der Zugkraftvorrichtung, insbesondere des Umlenkelements vorgesehen ist. Die Zugkraftvorrichtung, welche vorzugsweise eine kranartige Struktur aufweist, kann diesen Mast umfassen. Der Verbindungsabschnitt sollte aus einem stabilen quaderförmigen Steg ausgebildet sein, um genügend Fläche zur Anordnung des Mastes bereitzustellen. Des Weiteren sollte der Verbindungsabschnitt aus einem Metall, beispielsweise aus Eisen ausgebildet sein und eine Mindestdicke von 0,5 cm bis 2,5 cm aufweisen. Der Verbindungsabschnitt kann Bestandteil des Trägerelements sein.

Der Verbindungsabschnitt kann auch nachträglich mit dem Trägerelement verbunden werden, beispielsweise mittels einer Schraubverbindung oder Schweißverbindung. Es muss sichergestellt werden, dass der Verbindungsabschnitt beim Anheben der Versorgungsleitung durch die Hebevorrichtung unbeweglich relativ zu anderen Abschnitten des Trägerelements bleibt.
Die Konstruktion der Hebevorrichtung kann weiter vereinfacht werden, wenn der erste Mast einen ersten Mastabschnitt und einem zweiten Mastabschnitt aufweist, wobei der erste Mastabschnitt und der zweite Mastabschnitt in einem im Wesentlichen rechten Winkel zueinander angeordnet sind. Durch diese Anordnung kann der Mast in der Form eines Galgens ausgebildet werden. Somit kann die Reichweite des Verbindungselements erhöht werden und sichergestellt werden, dass mit einfachen und weniger zeitaufwendigen Schritten das Verbindungselement über den Versorgungsleitungen platziert werden kann. Das Positionieren des Verbindungselements an der Versorgungsleitung wird dadurch für den Arbeiter erheblich vereinfacht, insbesondere auch dann, wenn der Mast verschwenkbar bzw. beweglich, vorzugsweise um seine eigene Längsachse rotieren kann.
Um das Bewegen des Verbindungselements, insbesondere des Zugelements jederzeit sicherstellen zu können, kann vorgesehen sein, dass an dem ersten Mast, insbesondere an dem ersten und/oder zweiten Mastabschnitt des ersten Mastes ein als Führungselement ausgebildeter zweiter Mast beabstandet zu dem ersten Mast angeordnet ist, welcher ebenfalls zur Anordnung der Zugkraftvorrichtung, insbesondere des Umlenkelements vorgesehen ist sowie zur Anordnung und Führung des Kolbens ausgebildet ist.
Durch diese vorteilhafte Maßnahme gelingt es, den Bauraum für die einzelnen Bauteile der Hebevorrichtung so gering wie möglich zu halten. Im Ergebnis kann somit eine kompakte Hebevorrichtung bereitgestellt werden, welche einfach und sicher durch einen Arbeiter zu bedienen ist.
Sehr kompakt und kostengünstig kann die Konstruktion der Hebevorrichtung ausgebildet werden, wenn das Trägerelement im Frontabschnitt ein Lagerelement zur Lagerung eines Rades, insbesondere eines Vorderrades der Hebevorrichtung umfasst. So kann in vorteilhafterweise der Bauraum der Hebevorrichtung zwischen den Schenkeln des V-förmigen bzw. U-förmigen Frontabschnitts genutzt werden, um das Vorderrad dort anzuordnen. Somit wird auch in vorteilhafterweise ausgeschlossen, dass wenn die Hebevorrichtung gegen eine Versorgungsleitung stößt, zuerst die Schenkel des V-förmigen bzw. U-förmigen Frontabschnitts die Versorgungsleitung berühren und somit das Vorderrad, insbesondere auch ein Reifen des Vorderrads unberührt bleibt, dadurch kann Lebensdauer der Hebevorrichtung, insbesondere des Vorderrads weiter erhöht werden. Die Lebensdauer des U-förmigen bzw. V-förmigen Frontabschnitts kann verlängert werden, wenn dieser mit mindestens einem Dämpfungselement versehen wird, welches beispielsweise aus einem elastischen Material, vorzugsweise aus Gummi ausgebildet ist.
Beim Anheben der Versorgungsleitung durch die Hebevorrichtung wirken hohe Kräfte auf das Trägerelement. Bevorzugt ist daher vorgesehen, dass das Lagerelement mit dem Frontabschnitt, insbesondere über ein erstes Stützelement mit dem ersten Schenkel, und über ein zweites Stützelement mit dem zweiten Schenkel sowie vorzugsweise über ein drittes Stützelement mit der Basis des Frontabschnitts verbunden ist und mit dem ersten Mast, insbesondere mit dem ersten Mastabschnitt und/oder zweiten Mastabschnitt über ein viertes Stützelement verbunden ist. Durch diese Maßnahme wird in vorteilhafterweise sichergestellt, dass beim Anheben der Versorgungsleitung das Vorderrad unbeschädigt bleibt. Ebenfalls wird durch diese Maßnahme sichergestellt, dass die Lebensdauer für das Vorderrad verlängert wird. Vorzugsweise weist das Vorderrad einen kleineren Durchmesser auf als die Hinterräder.
Um das Rad, insbesondere das Vorderrad sicher und einfach zu lagern, kann vorgesehen sein, dass eine Radaufhängung für das Rad, insbesondere für das Vorderrad vorgesehen ist, wobei in dem Lagerelement ein Federelement angeordnet ist, welches mit der Radaufhängung und/oder dem Vorderrad verbunden ist, wobei beim Anheben der Versorgungsleitung eine Relativbewegung zwischen dem Lagerelement und dem Vorderrad und/oder der Radaufhängung vorgesehen ist. Im unbelasteten Zustand der Hebevorrichtung, wenn das Verbindungselement noch nicht im Prozess des Anhebens der Versorgungsleitungen ist, befindet sich das Federelement in einem entspannten Zustand. Wenn die Versorgungsleitung durch die Hebevorrichtung angehoben wird, senkt sich das Trägerelement in Richtung der Bodenoberfläche des Gewächshauses und dabei wird das Federelement zusammengedrückt. Wenn keine durch die Schwerkraft der Versorgungsleitung hervorgerufenen Kräfte mehr auf das Verbindungselement wirken, wird das Federelement wieder zurück in seinen entspannten Ursprungszustand überführt, und das Trägerelement bewegt sich wieder zurück in seine Ausgangsstellung.

Die Erfindung sowie das technische Umfeld werden nachfolgend anhand der Figuren näher erläutert. Es ist darauf hinzuweisen, dass die Figuren besonders bevorzugte Ausführungsbeispiele der Erfindung zeigen, die Erfindung jedoch nicht darauf beschränkt ist.

Die Figuren zeigen:
- Figur 1: ein Gewächshaus mit Pflanzen und Versorgungsleitungen
- Figur 2: das Gewächshaus ohne Pflanzen mit Versorgungsleitungen und einer Hebevorrichtung gemäß einer ersten Ausführungsform,
- Figur 3a: die erfindungsgemäße Hebevorrichtung gemäß der ersten Ausführungsform in einer Seitenansicht,
- Figur 3b: die erfindungsgemäße Hebevorrichtung gemäß der ersten Ausführungsform in einer Vorderansicht,
- Figur 3c: die erfindungsgemäße Hebevorrichtung gemäß der ersten Ausführungsform in einer Hinteransicht,
- Figur 3d: die erfindungsgemäße Hebevorrichtung gemäß der ersten Ausführungsform in einer Draufsicht, und
- Figur 4: eine erfindungsgemäße Hebevorrichtung gemäß einer zweiten Ausführungsform in einer perspektivischen Darstellung.

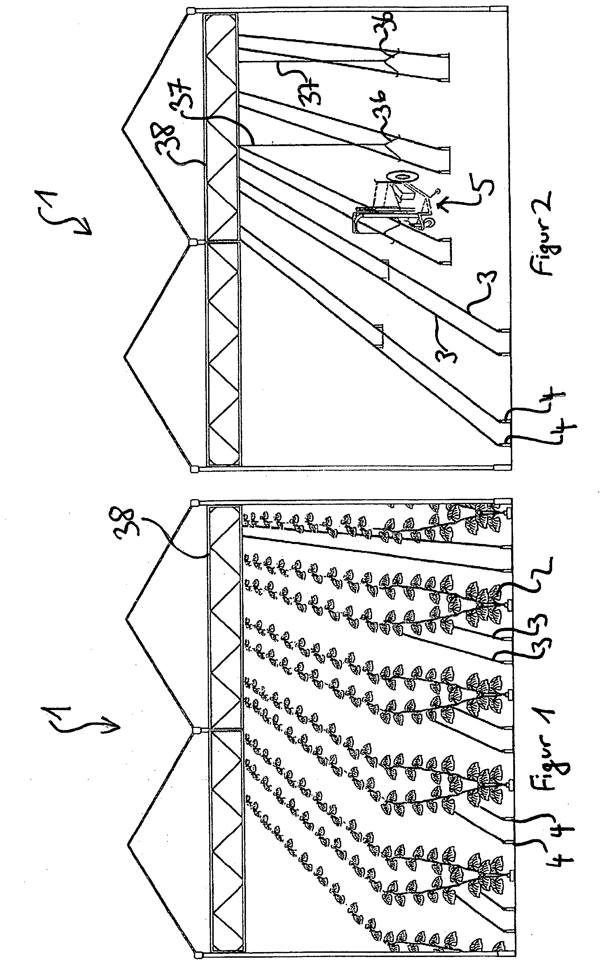

In der Figur 1 und in der Figur 2 ist ein Gewächshaus 1 zur Anordnung von Gewächsen und/oder Pflanzen 2, wie beispielsweise Gemüse gezeigt. In dem Gewächshaus 1 sind vorzugsweise schienenartig und beabstandet zueinander Versorgungsleitungen 3 auf Abstützsockeln 4 angeordnet, welche beispielsweise als Heizrohere oder als Wasserrohre ausgebildet sind und zur Beheizung bzw. Bewässerung der Pflanzen 2 dienen. Unterhalb der Versorgungsleitungen 3 und ggf. der Abstützsockel 4 kann sich eine nicht näher dargestellte Folie befinden, auf welcher Pflanzenreste angeordnet sein können, welche entfernt werden müssen. Ferner besteht auch der Bedarf die Folie nach einer gewissen Benutzungsdauer auszutauschen. Wie in der Figur 2 visualisiert müssen dafür die Versorgungsleitungen 3 angehoben werden. Dazu ist eine Hebevorrichtung 5 vorgesehen, wobei die Hebevorrichtung 5 eine elektrische Schaltung zur Steuerung derselben umfasst. Die vorzugsweise handbedienbare und elektrohydraulische Hebevorrichtung 5 kann als Gewächshausversorgungsleitungshebevorrichtung ausgebildet sein, welche ausschließlich für den Gebrauch in dem Gewächshaus 1 ausgebildet ist, in welchem die Pflanzen und/oder Gewächse gezüchtet werden. Die Hebevorrichtung 5 umfasst weiter eine elektrische Schaltung zur Steuerung derselben.

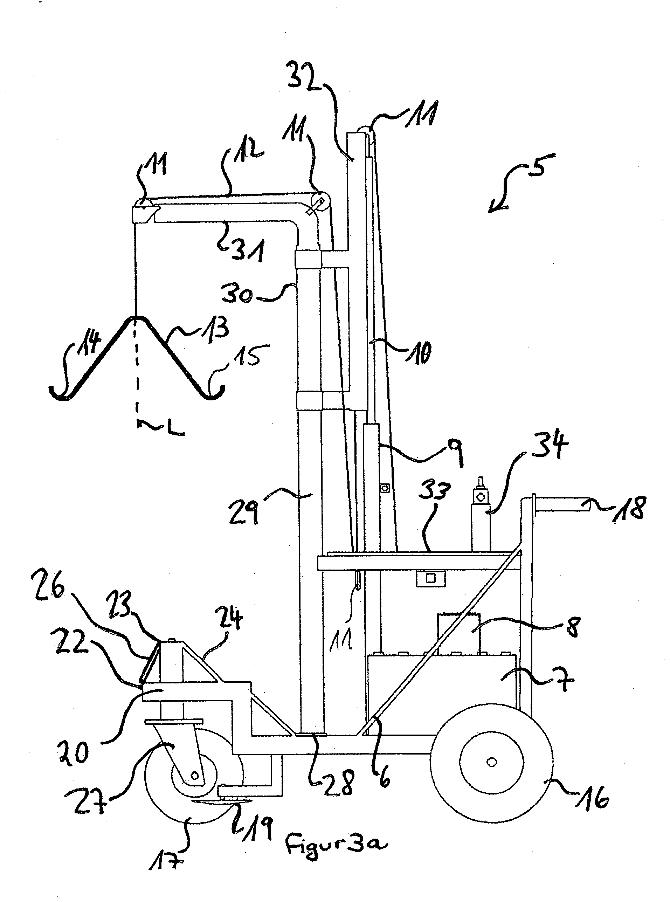

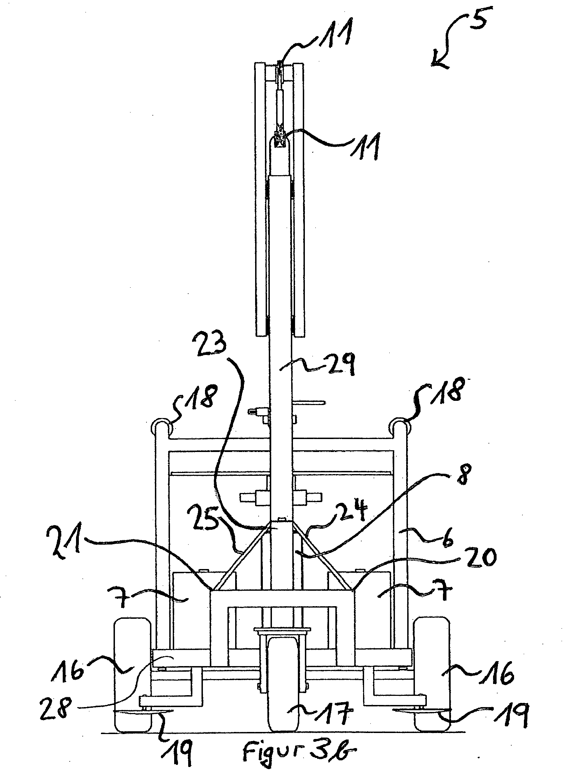

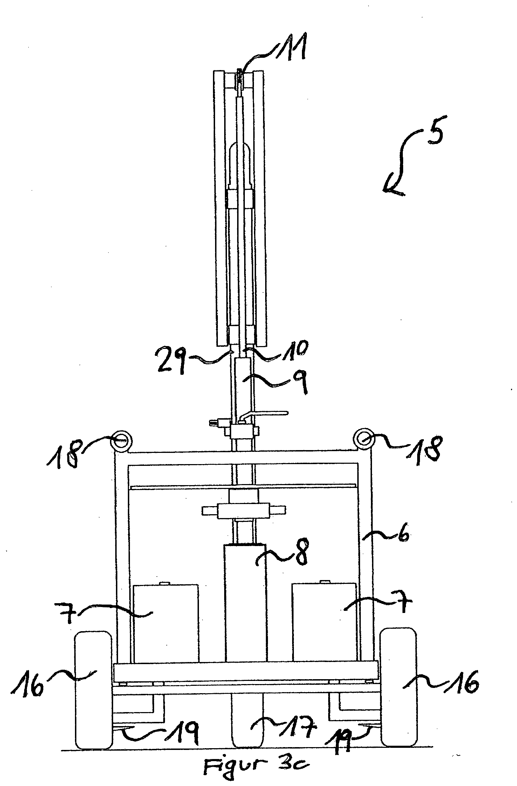

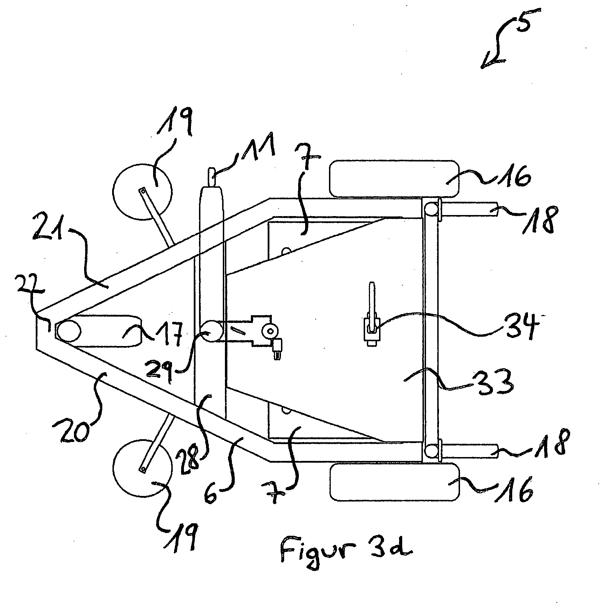

In den Figuren 3a bis 3d ist schematisch eine Hebevorrichtung 5 gemäß einer ersten Ausführungsform gezeigt. Die Hebevorrichtung 5 weist ein Trägerelement 6 auf, an welchem hier vorzugsweise zwei insbesondere als Batterie ausgebildete elektrische Energiespeicher 7 angeordnet sind. Die elektrischen Energiespeicher 7 sind elektrisch mit einer auf dem Trägerelement 6 angeordneten Hydraulikeinheit verbunden, welche eine Hydraulikpumpe 8, einen Hydraulikzylinder 9, und einen in dem Hydraulikzylinder 9 vorgesehenen Kolben 10 umfasst. Die Hydraulikeinheit kann auch einen Kompressor, insbesondere einen Hydraulikkompressor umfassen. Ferner ist auf dem Trägerelement 6 zumindest teilweise eine als Seilzug oder alternativ als Kettenzug oder Flaschenzug ausgebildete Zugkraftvorrichtung angeordnet, welche hier vorzugsweise als Seilrollen oder Kettenrollen ausgebildete Umlenkelemente 11 und zumindest ein als Seil oder alternativ als Kette ausgebildetes Zugelement 12 umfasst. Die Zugkraftvorrichtung ist mit der Hydraulikeinheit kraftschlüssig und/oder formschlüssig verbunden ist. Dabei kann der Kolben 10 mit der Zugkraftvorrichtung, insbesondere mit mindestens einem Umlenkelement 11 verbunden sein. Ein Ende des Zugelements 12 kann an dem Trägerelement 6 und/oder auf einer vorzugsweise aus Holz, insbesondere aus Sperrholz ausgebildeten Platte 33, welche mit dem Trägerelement 6 verbunden ist, kraftschlüssig befestigt sein.
Das Zugelement 12 ist mit einem zum Anheben der Versorgungsleitungen 3 ausgebildeten Verbindungselement 13 verbunden, wobei das hier vorzugsweise als Haken, insbesondere als Doppelhaken ausgebildete Verbindungselement 13 einen ersten Kontaktabschnitt 14 und einen zweiten Kontaktabschnitt 15 aufweist, die jeweils zumindest teilweise komplementär zu einer geometrischen Form der Außenoberfläche der Versorgungsleitung 3 ausgebildet sind. Der Haken kann als Rohrhaken ausgebildet sein. Der Haken, insbesondere Doppelhaken umfasst den ersten Kontaktabschnitt 14 und den zu dem ersten Kontaktabschnitt 14 zu einer Längsachse L des Verbindungselements spiegelsymmetrisch angeordneten zweiten Kontaktabschnitt 15, wie dies gut in der Figur 3a zu erkennen ist. Hier sind jeweils der erste Kontaktabschnitt 14 und der zweite Kontaktabschnitt 15 zumindest teilweise u-förmig ausgebildet und zur zeitweisen und punktuellen Aufnahme einer rohrförmigen, insbesondere rundförmigen ausgebildeten Versorgungsleitung 3 vorgesehen.
Des Weiteren sind an dem Trägerelement 6 im vorliegenden Ausführungsbeispiel der Hebevorrichtung 5 drei Räder, insbesondere zwei Hinterräder 16 und ein Vorderrad 17 angeordnet.
Ferner sind an dem Trägerelement 6 zwei Griffelemente 18 zum Führen und Steuern der Hebevorrichtung 5 angeordnet. An dem Trägerelement 6 sind vorzugsweise zwei Abstützelemente 19 angeordnet, wobei vorzugsweise jedes Abstützelement 16 jeweils über mindestens ein nicht näher gezeigtes Abstützfederelement mit dem Trägerelement 6 verbunden ist. Die Abstützfederelemente sind so robust ausgebildet, dass diese die Gewichtskraft der Hebevorrichtung 5 tragen und beim Anheben der Versorgungsleitung 3 zusammengedrückt werden, wenn die zusätzliche Gewichtskraft der Versorgungsleitung 3 auf die Hebevorrichtung 5 wirkt.
Das Trägerelement 6 weist einen Frontabschnitt auf, der im Wesentlichen V-förmig oder alternativ U-förmig ausgebildet ist, wobei ein erster Schenkel 20 und ein zweiter Schenkel 21 des V-förmigen Frontbereichsabschnitts durch eine Basis 22 miteinander verbunden sind. Das Trägerelement 6 umfasst im Frontabschnitt ein Lagerelement 23 zur Lagerung des Vorderrades 17 der Hebevorrichtung 5. Das Lagerelement 23 ist mit dem Frontabschnitt, insbesondere über ein erstes Stützelement 24 mit dem ersten Schenkel 20, und über ein zweites Stützelement 25 mit dem zweiten Schenkel 21 sowie über ein drittes Stützelement 26 mit der Basis 22 des Frontabschnitts verbunden. Des Weiteren ist eine Radaufhängung 27 für das Vorderrad 17 vorgesehen, wobei in dem Lagerelement 23 ein nicht näher gezeigtes Federelement angeordnet ist, welches mit der Radaufhängung 27 und/oder dem Vorderrad 17 verbunden ist, wobei beim Anheben der Versorgungsleitung 3 eine Relativbewegung zwischen dem Lagerelement 23 und dem Vorderrad 17 und/oder der Radaufhängung 23 vorgesehen ist, wobei beim Anheben der Versorgungsleitungen 3 mittels des Verbindungselements 13 vorzugsweise alle Räder 16, 17 und Abstützelemente 19 mit einer Bodenoberfläche des Gewächshauses 1 in Kontakt stehen. Das Federelement befindet sich in einem Rohr oberhalb der Radaufhängung 27, insbesondere einer Vorderradaufhängung. Unter Last sinkt das Vorderrad 17 soweit ein, dass das jeweilige Abstützelement 19 den Boden berührt und somit stützt.

Das Trägerelement 6 weist einen Verbindungsabschnitt 28 auf, welcher vorzugsweise den ersten Schenkel 20 und den zweiten Schenkel 21 verbindet. Auf dem Verbindungsabschnitt 28 ist, insbesondere ein verschwenkbarer oder verdrehbarer erster Mast 29 angeordnet, welcher zumindest teilweise zur Anordnung der Zugkraftvorrichtung, insbesondere der Umlenkelemente 11 vorgesehen sein kann. Der erste Mast 29 weist einen ersten Mastabschnitt 30 und einen zweiten Mastabschnitt 31 auf, wobei der erste Mastabschnitt 30 und der zweite Mastabschnitt 31 in einem im Wesentlichen rechten Winkel zueinander angeordnet sind. An dem ersten Mast 29, insbesondere an dem ersten Mastabschnitt 30 und/oder an dem zweiten Mastabschnitt 31 des ersten Mastes 29 ist ein als Führungselement ausgebildeter zweiter Mast 32 beabstandet zu dem ersten Mast 29 angeordnet, welcher ebenfalls zur Anordnung der Zugkraftvorrichtung, insbesondere der Umlenkelemente 11 vorgesehen ist sowie zur Anordnung und Führung des Kolbens 10 ausgebildet ist.
Ferner kann das Lagerelement 23 vorzugsweise mit dem ersten Mast 29, insbesondere mit dem ersten Mastabschnitt 30 und/oder zweiten Mastabschnitt 31 über ein viertes Stützelement verbunden sein.
Auf der Platte 33 kann eine Bedienvorrichtung 34 zum Bedienen und Steuern der Hebevorrichtung 5, insbesondere zum Betätigen der Zugkraftvorrichtung vorgesehen sein.

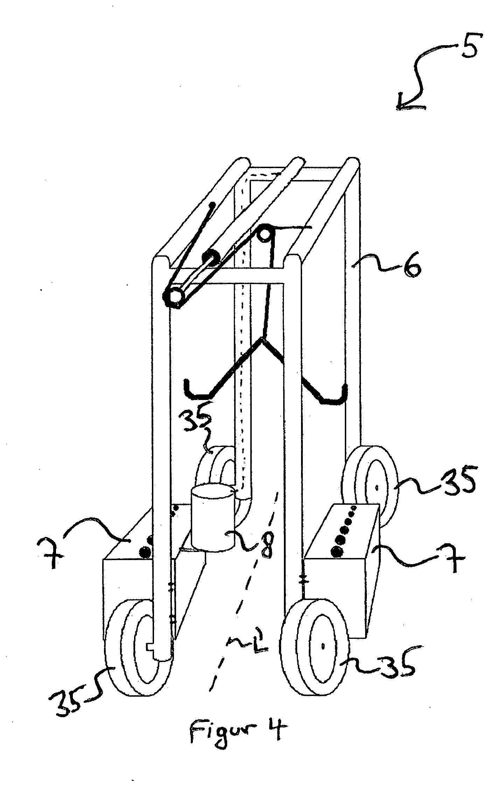

In der Figur 4 ist schematisch eine Hebevorrichtung 5 gemäß einer zweiten Ausführungsform gezeigt, welche im Wesentlichen die gleiche Funktion aufweist wie die Hebevorrichtung 5 gemäß der ersten Ausführungsform. Ein wesentlicher Unterschied zu der Ausführungsform gemäß der Figuren 3a -3d besteht darin, dass die Hebevorrichtung vier Räder 35 umfasst, welche an einem Trägerelement 6 angeordnet sind. Der Abstand von zwei an dem Trägerelement 6 angeordnete Rädern 35, welche spiegelsymmetrisch zu einer in Fahrtrichtung vorgesehenen Längsachse L' zueinander angeordnet sind, ist größer ist als der Durchmesser, insbesondere der Außendurchmesser einer Versorgungsleitung 3, vorzugsweise von zwei nebeneinander angeordneten Versorgungsleitungen 3. Somit können die Versorgungsleitungen 3 sich zwischen zwei am Trägerelement 6 angeordneten als elektrische Energiespeicher 7 ausgebildeten Batterien befinden, wenn die Hebevorrichtung 5 entlang der Versorgungsleitungen 3 bewegt wird.

Nachfolgend wird für die zwei zuvor beschriebenen Ausführungsbeispiele das Anheben der Versorgungsleitung 3 mit der Hebevorrichtung 5 kurz beschrieben.
Ein Benutzer bewegt die Hebevorrichtung 5 mittels der Griffelemente 18 zu der Versorgungsleitung 3. Danach betätigt der Benutzer die Bedienvorrichtung 34, wodurch die Hydraulikeinheit gestartet wird. Dabei wird der Kolben 10 senkrecht nach unten bewegt, so dass die Zugvorrichtung, insbesondere das mit dem Kolben 10 vorzugsweise über das Umlenkelement 11 verbundene Zugelement 12 in Bewegung versetzt wird. Das Verbindungselement 13, welches mit dem Zugelement 12 verbunden ist, wird in Richtung der Versorgungsleitung 3 bewegt. Ebenfalls wäre es denkbar, dass zusätzlich und/oder alternativ die Zugkraftvorrichtung, insbesondere das Verbindungselement 13 zusätzlich mit einem elektrischen Antrieb verbunden ist, um das Verbindungselement 13 zur besseren Justierung an die Versorgungsleitung 3 langsamer heranfahren zu können. Mittels der Bedienvorrichtung 34 wird die Hydraulikeinrichtung oder alternativ der elektrische Antrieb wieder gestoppt.
In einem weiteren Schritt verbindet der Benutzer die Versorgungsleitung 3 mit dem Verbindungselement 13. Anschließend betätigt der Benutzer die Bedienvorrichtung 34, wodurch die Hydraulikeinheit wieder gestartet wird. Dabei wird der Kolben 10 senkrecht nach oben bewegt, so dass die Zugvorrichtung, insbesondere das mit dem Kolben 10 vorzugsweise über das Umlenkelement 11 verbundene Zugelement 12 in Bewegung versetzt wird. Das Verbindungselement 13, welches mit dem Zugelement 12 verbunden ist, wird gemeinsam mit der Versorgungsleitung 3 nach oben bewegt, so dass die Versorgungsleitung 3 beabstandet zur Bodenoberfläche angeordnet ist. Mittels der Bedienvorrichtung 34 wird die Hydraulikeinrichtung wieder gestoppt. Die Versorgungsleitung 3 verläuft in dem angehobenen Abschnitt entlang einer gaußförmigen Glockenkurve. Durch die Verwendung der Hydraulikeinheit kann eine zuverlässige, sichere, schnelle und zeitsparende Anhebung der Versorgungsleitung 3 realisiert werden. Dabei kann innerhalb von ein bis zwei Sekunden die Versorgungsleitung 3 mindestens 0,5m gegenüber der Bodenoberfläche, vorzugsweise bis zu 1,0m angehoben werden. Während des Anhebens der Versorgungsleitung 3 senkt sich aufgrund der Gewichtskraft des angehobenen Abschnitts der Versorgungsleitung 3 die Hebevorrichtung 5 ab und wird durch die federgelagerten Abstützelemente 19 abgestützt.

Die gesamten Versorgungsleitungen 3 des Gewächshauses 1 werden in zuvor aufgehängten als weitere Verbindungselemente 36 ausgebildete Haken eingehängt, welche jeweils beispielsweise über ein Verbindungsseil 37 oder eine Verbindungskette vorzugsweise mit einer Dachkonstruktion 38 des Gewächshauses 1 verbunden sind, und verbleiben dort (siehe Figur 2). Erst nach dem Einbau der neuen Folien werden die Verbindungsleitungen 3 allesamt wieder heruntergelassen.
Im Ergebnis kann die Hebevorrichtung 5 folglich dazu dienen, die gesamten Versorgungsleitungen 3 sukzessive von der Bodenoberfläche nach oben in die von der Dachkonstruktion 38 hängenden Haken, welche vorzugsweise einen Abstand zur Bodenoberfläche von 1,2m aufweisen, anzuheben, um diese dort permanent bzw. zeitweise einzuhängen. Dann kann das gesamte Gewächshaus 1 von Schmutz und Folien, welche bis zu 100m und mehr lang sein können, befreit und die Bodenoberfläche gereinigt werden. Anschließend werden neue Folien, insbesondere Folienbahnen verlegt und die Versorgungsleitungen 3 werden aus den vorzugsweise als obere Aufhängung ausgebildeten Haken wieder sukzessive mit der Hebevorrichtung 5 zur Bodenoberfläche gelassen.

### Bezugszeichenliste

- 1: Gewächshaus
- 2: Pflanzen
- 3: Versorgungsleitung
- 4: Abstützsockel
- 5: Hebevorrichtung
- 6: Trägerelement
- 7: elektrischer Energiespeicher
- 8: Hydraulikpumpe
- 9: Hydraulikzylinder
- 10: Kolben
- 11: Umlenkelemente
- 12: Zugelement
- 13: Verbindungselement
- 14: Erster Kontaktabschnitt
- 15: Zweiter Kontaktabschnitt
- 16: Hinterrad
- 17: Vorderrad
- 18: Griffelement
- 19: Abstützelemente
- 20: Erster Schenkel
- 21: Zweiter Schenkel
- 22: Basis
- 23: Lagerelement
- 24: Erstes Stützelement
- 25: Zweites Stützelement
- 26: Drittes Stützelement
- 27: Radaufhängung
- 28: Verbindungsabschnitt
- 29: Erster Mast
- 30: Erster Mastabschnitt
- 31: Zweiter Mastabschnitt
- 32: Zweiter Mast
- 33: Platte
- 34: Bedienvorrichtung
- 35: Räder
- 36: Weiteres Verbindungselement
- 37: Verbindungsseil
- 38: Dachkonstruktion

## Patentansprüche

1. Hebevorrichtung (5) für ein Gewächshaus (1) zur Anhebung von mindestens einer Versorgungsleitung (3), wobei die Hebevorrichtung (5) ein Trägerelement (6) aufweist, an welchem zumindest
- ein elektrischer Energiespeicher (7) angeordnet ist,
- eine mit dem elektrischen Energiespeicher (7) elektrisch verbundene Hydraulikeinheit mit zumindest einer Hydraulikpumpe (8), einen Hydraulikzylinder (9), und einen in dem Hydraulikzylinder (9) vorgesehenen Kolben (10) angeordnet ist,
- eine Zugkraftvorrichtung angeordnet ist, welche zumindest ein Umlenkelement (11) und zumindest ein Zugelement (12) umfasst,
wobei die Zugkraftvorrichtung mit der Hydraulikeinheit kraftschlüssig und/oder formschlüssig verbunden ist,
**dadurch gekennzeichnet, dass**
das Zugelement (12) mit einem zum Anheben der Versorgungsleitung (3) ausgebildeten Verbindungselement (13) verbunden ist.

2. Hebevorrichtung (5) nach Anspruch 1, **dadurch gekennzeichnet, dass** das Verbindungselement (13) mindestens einen ersten Kontaktabschnitt (14) aufweist, welcher zumindest teilweise komplementär zu einer geometrischen Form einer Außenoberfläche der Versorgungsleitung (3) ausgebildet ist.

3. Hebevorrichtung (5) nach Anspruch 1 oder 2, **dadurch gekennzeichnet, dass** das Verbindungselement (13) als Haken ausgebildet ist, welcher den ersten Kontaktabschnitt (14) und vorzugsweise einen zu dem ersten Kontaktabschnitt (14) zu einer Längsachse L des Verbindungselements (13) spiegelsymmetrisch angeordneten zweiten Kontaktabschnitt (15) umfasst.

4. Hebevorrichtung (5) nach Anspruch 2 oder 3, **dadurch gekennzeichnet, dass** zumindest der erste Kontaktabschnitt (14) und vorzugsweise der zweite Kontaktabschnitt (15) zumindest teilweise u-förmig ausgebildet sind und zur zeitweisen und punktuellen Aufnahme einer rohrförmigen, insbesondere rundförmigen ausgebildeten Versorgungsleitung (3) vorgesehen sind.

5. Hebevorrichtung (5) nach mindestens einem der vorhergehenden Ansprüche 1 bis 4, **dadurch gekennzeichnet, dass** an dem Trägerelement (6) mindestens ein erstes Abstützelement (19) und vorzugsweise ein zweites Abstützelement (19) angeordnet ist, wobei vorzugsweise jedes Abstützelement (19) jeweils über mindestens ein Abstützfederelement mit dem Trägerelement (6) verbunden ist.

6. Hebevorrichtung (5) nach mindestens einem der vorhergehenden Ansprüche 1 bis 5, **dadurch gekennzeichnet, dass** an dem Trägerelement (6) mindestens drei Räder (16, 17, 35) angeordnet sind, vorzugsweise vier Räder (16, 17, 35) angeordnet sind, wobei beim Anheben der Versorgungsleitungen (3) mittels des Verbindungselements (13) alle Räder (16, 17, 35) und Abstützelemente (19) mit einer Bodenoberfläche des Gewächshauses (1) in Kontakt stehen.

7. Hebevorrichtung (5) nach Anspruch 6, **dadurch gekennzeichnet, dass** der Abstand von zwei an dem Trägerelement (6) angeordnete Rädern (16, 17, 35), welche spiegelsymmetrisch in Fahrtrichtung zueinander angeordnet sind, größer ist als der Durchmesser, insbesondere der Außendurchmesser einer Versorgungsleitung (3), vorzugsweise von zwei nebeneinander angeordneten Versorgungsleitungen (3).

8. Hebevorrichtung (5) nach mindestens einem der vorhergehenden Ansprüche 1 bis 7, **dadurch gekennzeichnet, dass** der Kolben (10) mit der Zugkraftvorrichtung, insbesondere mit mindestens einem Umlenkelement (11) verbunden ist.

9. Hebevorrichtung (5) nach mindestens einem der vorhergehenden Ansprüche 1 bis 8, **dadurch gekennzeichnet, dass** das Trägerelement (6) einen Frontabschnitt aufweist, der im Wesentlichen V-förmig oder U-förmig ausgebildet ist, wobei ein erster Schenkel (20) und ein zweiter Schenkel (21) des V-förmigen oder U-förmigen Frontbereichsabschnitts durch eine Basis (22) miteinander verbunden sind.

10. Hebevorrichtung (5) nach mindestens einem der vorhergehenden Ansprüche 1 bis 9, **dadurch gekennzeichnet, dass** das Trägerelement (6) einen Verbindungsabschnitt (28) aufweist, welcher vorzugsweise den ersten Schenkel (20) und den zweiten Schenkel (21) verbindet, wobei auf dem Verbindungsabschnitt (28), insbesondere ein verschwenkbarer oder verdrehbarer erster Mast (29) angeordnet ist, welcher zumindest teilweise zur Anordnung der Zugkraftvorrichtung, insbesondere des Umlenkelements (11) vorgesehen ist.

11. Hebevorrichtung (5) nach Anspruch 10, **dadurch gekennzeichnet, dass** der erste Mast (29) einen ersten Mastabschnitt (30) und einem zweiten Mastabschnitt (31) aufweist, wobei der erste Mastabschnitt (30) und der zweite Mastabschnitt (31) in einem im Wesentlichen rechten Winkel zueinander angeordnet sind.

12. Hebevorrichtung (5) nach Anspruch 10 oder 11, **dadurch gekennzeichnet, dass** an dem ersten Mast (29), insbesondere an dem ersten (30) und/oder zweiten Mastabschnitt (31) des ersten Mastes (29) ein als Führungselement ausgebildeter zweiter Mast (32) beabstandet zu dem ersten Mast (31) angeordnet ist, welcher ebenfalls zur Anordnung der Zugkraftvorrichtung, insbesondere des Umlenkelements (11) vorgesehen ist sowie zur Anordnung und Führung des Kolbens (10) ausgebildet ist.

13. Hebevorrichtung (5) nach mindestens einem der vorhergehenden Ansprüche 9 bis 12, **dadurch gekennzeichnet, dass** das Trägerelement (6) im Frontabschnitt ein Lagerelement (23) zur Lagerung eines Rades (16, 17, 35), insbesondere eines Vorderrades (17) der Hebevorrichtung (5) umfasst.

14. Hebevorrichtung (5) nach Anspruch 13, **dadurch gekennzeichnet, dass** das Lagerelement (23) mit dem Frontabschnitt, insbesondere über ein erstes Stützelement (24) mit dem ersten Schenkel (20), und über ein zweites Stützelement (25) mit dem zweiten Schenkel (21) sowie vorzugsweise über ein drittes Stützelement (26) mit der Basis (22) des Frontabschnitts verbunden ist und mit dem ersten Mast (29), insbesondere mit dem ersten Mastabschnitt (30) und/oder zweiten Mastabschnitt (31) über ein viertes Stützelement verbunden ist.

15. Hebevorrichtung (5) nach mindestens einem der vorhergehenden Ansprüche 1 bis 14, **dadurch gekennzeichnet, dass** eine Radaufhängung (27) für das Rad (16, 17, 35), insbesondere für das Vorderrad (17) vorgesehen ist, wobei in dem Lagerelement (23) ein Federelement angeordnet ist, welches mit der Radaufhängung (27) und/oder dem Vorderrad (17) verbunden ist, wobei beim Anheben der Versorgungsleitung (3) eine Relativbewegung zwischen dem Lagerelement (23) und dem Vorderrad (17) und/oder der Radaufhängung (27) vorgesehen ist.
